## Europäisches Patentamt
## European Patent Office
## Office européen des brevets

(19)

(11) Veröffentlichungsnummer: **0 099 499**
**B1**

(12) **EUROPÄISCHE PATENTSCHRIFT**

(45) Veröffentlichungstag der Patentschrift:
16.10.85

(51) Int. Cl.⁴: **C 09 C 1/34,** C 01 B 13/18,
C 01 G 37/00, C 01 B 13/32

(21) Anmeldenummer: 83106460.5

(22) Anmeldetag: 02.07.83

(54) Verfahren zur Herstellung von Bismutoxid/Chromoxid-Mischphasenpigmenten.

(30) Priorität: 17.07.82 DE 3226892

(43) Veröffentlichungstag der Anmeldung:
01.02.84 Patentblatt 84/5

(45) Bekanntmachung des Hinweises auf die Patenterteilung:
16.10.85 Patentblatt 85/42

(84) Benannte Vertragsstaaten:
DE FR GB IT

(56) Entgegenhaltungen:
DE - A - 1 592 388
DE - A - 2 135 184

CHEMICAL ABSTRACTS, Band 72, Nr. 14, 6. April 1970,
Seite 411, Nr. 71837a, Columbus, Ohio, USA, K.
MASUNO: "Crystal studies of the Bi2O3-Cr2O3 system"
CHEMICAL ABSTRACTS, Band 88, Nr. 24, 12. Juni 1978,
Seite 490, Nr. 177845x, Columbus, Ohio, USA,
MASANORI INADA: "Crystal phases of nonohmic zinc
oxide ceramics"

(73) Patentinhaber: BAYER AG, Konzernverwaltung RP
Patentabteilung, D-5090 Leverkusen 1 Bayerwerk (DE)

(72) Erfinder: Köhler, Peter, Dr., Bethelstrasse 10,
D-4150 Krefeld 11 (DE)
Erfinder: Heine, Heinrich, Dr., Bärenstrasse 13,
D-4150 Krefeld 1 (DE)

## Beschreibung

Die Vorliegende Erfindung betrifft ein Verfahren zur Herstellung gelboranger bis orangeroter Bismutoxid/Chromoxid-Mischphasenpigmente der Zusammensetzung $(Bi_{2-x}Cr_x)O_3$ mit Werten für x zwischen 0,05 und 0,5.

Reines Bismuttrioxid $(Bi_2O_3)$ existiert in vier verschiedenen Modifikationen. Bei Raumtemperatur ist nur die $\alpha$-Phase stabil. Im Temperaturbereich zwischen 717 und 825° wird $\delta$-$Bi_2O_3$ als Hochtemperaturphase erhalten, während $\beta$- und $\gamma$-$Bi_2O_3$ metastabil sind (Gmelins Handbuch der anorganischen Chemie, Bd. 19, S. 629 (1964), 8. Auflage). Durch Zusatz von Metalloxiden wie z.B. $Sb_2O_3$, $Al_2O_3$, $Ga_2O_3$, $In_2O_3$, $Fe_2O_3$, $Cr_2O_3$, $ZrO_2$, $SiO_2$ oder $GeO_2$ zur $Bi_2O_3$-Schmelze sind nach dem Abkühlen die tetragonale $\beta$- sowie die kubische $\gamma$-Phase bei Raumtemperatur stabilisierbar (G. Gattow, H. Schröder; Z. anorg. allg. Chem. 318 (1962), S. 176).

In der DE-OS 1592388 wird die Mischphasenbildung von $Bi_2O_3$ mit einer Vielzahl 1- bis 6wertiger Metalloxide durch Glühen homogener Mischungen entsprechender Komponenten beschrieben, wobei je nach chemischer Zusammensetzung die verschiedenen Modifikationen des $Bi_2O_3$ zugänglich sind. Durch den Einbau von $Cr_2O_3$ werden nach diesem Verfahren lediglich Produkte mit tomatenroter Farbe stabilisiert, die jedoch nicht die erforderlichen Teilchengrössen besitzen, um als Pigmente Verwendung finden zu können.

Die Aufgabe der vorliegenden Erfindung ist es, ein Verfahren zur Verfügung zu stellen, das die Herstellung von Bismutoxid/Chromoxid-Mischphasenpigmenten der Zusammensetzung $Bi_{2-x}Cr_xO_3$ $(0,05 \leq x \leq 0,5)$ mit spezifischen Oberflächen zwischen 1,0 und 10 $m^2/g$ nach einem einfachen und wirtschaftlichen Verfahren erlaubt und die Nachteile des Standes der Technik, wie zum Beispiel den Einsatz teurer Bismut-Rohstoffe, nicht aufweist.

Überraschenderweise wurde nun gefunden, dass diese Aufgabe gelöst wird durch ein Verfahren zur Herstellung von gelborangen bis orangeroten Bismutoxid/Chromoxid-Mischphasenpigmenten, das dadurch gekennzeichnet ist, dass man metallisches Bismut mit Chrom-(III)- und/oder Chrom-(VI)-Verbindungen intensiv mischt, die homogene Mischung in oxidierender Atmosphäre bei Temperaturen zwischen 500 und 800°C glüht und das Produkt anschliessend auf Pigmentgrösse zerkleinert.

Das metallische Bismut sollte vorteilhafterweise in feinverteilter Form vorliegen, was durch mechanisches Zerkleinern (z.B. in Brechern) und intensives Mahlen in Trocken- oder Nassmühlen erreicht werden kann.

Als Chromquellen können $Cr_2O_3$ (BET-Oberflächen > 2,5 $m^2/g$), $CrO_3$, $CrOOH$ (BET-Oberflächen > 5 $m^2/g$), Cr-(III)-Acetat (BET-Oberflächen > 5 $m^2/g$) sowie Cr-(III)-Hydroxide (BET-Oberflächen > 10 $m^2/g$) Verwendung finden.

Das Mischen des feingepulverten Bismutmetalls mit der Chrom-Komponente kann sowohl trocken als auch nass erfolgen. Besonders vorteilhaft ist eine Nassmischung der Komponenten in Kugel-, Mörser- oder Sandmühlen.

Die homogene Paste wird auf eine Restfeuchte unterhalb von 2 Gew.-% in den üblichen Trocknungsaggregaten wie Trockenschränken, Bandtrocknern oder Walzentrocknern getrocknet und zu einem einheitlichen Pulver zerkleinert (z.B. Kugelmühlen, Pendelmühlen, Mörsermühlen).

Es ist aber auch möglich, die feuchte Rohstoffmischung direkt zur Glühung einzusetzen.

Das Glühen der Rohstoffmischung sollte vorzugsweise unter Produktbewegung in Drehrohr- oder Drehtrommelöfen mit direkter oder indirekter Beheizung in oxidierender Atmosphäre erfolgen. Die oxidierende Atmosphäre wird durch den Luftsauerstoff oder durch Begasung mit Luft/Sauerstoff-Gemischen erzeugt. Die Umsetzung der Rohstoffmischung kann auch im Wirbelbett durchgeführt werden.

Zur Herstellung phasenreiner $(Bi, Cr)_2O_3$-Mischphasen (Struktur des $\beta$-$Bi_2O_3$) sind Temperaturen zwischen 500 und 800°C sowie Glühzeiten zwischen 1 und 16 h, vorzugsweise zwischen 6 und 19 h, ausreichend. Ein langsames Hochheizen der Rohstoffmischung von Raumtemperatur bis zur Endtemperatur ist gegenüber der direkten Glühung bei Temperaturen zwischen 500 und 800°C bezüglich der Farbreinheit der gebildeten Mischphasen von Vorteil.

Nach der Glühung erfolgen eine trockene Vorzerkleinerung der Produkte (z.B. in Mörsermühlen) und die Nassmahlung in Sandmühlen. Anschliessend wird filtriert, gewaschen, bei 105°C getrocknet und desagglomeriert.

Es muss als überraschend gewertet werden, dass sich metallisches Bismut nach dem erfindungsgemässen Verfahren bei Temperaturen von 500-800°C in nur einem Glühschritt zu phasenreinen orangeroten bis gelborangen $(Bi, Cr)_2O_3$-Mischphasen umsetzen lässt.

Der Farbton der $(Bi, Cr)_2O_3$-Mischphasen hängt von der Mischphasenzusammensetzung $(Bi_{2-x}Cr_xO_3$ mit $0,05 \leq x \leq 0,5)$ einerseits und von der Teilchengrösse der Endprodukte andererseits ab. Die Teilchengrössen dieser Pigmente sind durch die Höhe der Glühtemperatur (500-800°C) sowie durch die Intensität der Nassmahlung steuerbar.

Die erfindungsgemäss hergestellten Pigmente besitzen spezifische Oberflächen zwischen 1 und 10 $m^2/g$ (bestimmt nach BET-Methode gemäss DIN 661131) und haben aufgrund röntgenographischer Untersuchungen die Struktur der $\beta$-Phase des $Bi_2O_3$.

Die orangeroten bis gelborangen Bismutoxid/Chromoxid-Mischphasenpigmente mit spezifischen Oberflächen von vorzugsweise 1,5 bis 8 $m^2/g$ eignen sich zur Einfärbung von Lacken, Kunststoffen und Dispersionsfarben.

Nachfolgend wird die Erfindung anhand von Beispielen erläutert.

*Beispiel 1:*

177,65 g fein gepulvertes metallisches Bismut (99,99%ig, < 40 µm) und 11,52 g $Cr_2O_3$ (99,0%ig) wurden mit 45 ml Wasser bei Raumtemperatur in einem Mörser zu einer homogenen Paste verarbeitet, bei 105°C getrocknet und anschliessend pulverisiert.

Je ¼ dieser Rohstoffmischung wurden in einem Drehrohrofen 2 bzw. 8 h und die andere Hälfte 16 h bei 750°C unter Luft/Sauerstoff-Begasung geglüht (20 l/h; 1 Teil Luft, 1 Teil Sauerstoff), wobei das Aufheizen der Mischungen von Raumtemperatur bis 750°C innerhalb von 6 h erfolgte.

Die Glühprodukte wurden nass in einer Rührwerkskugel-Mühle gemahlen, filtriert, gewaschen und bei 105°C im Trockenschrank getrocknet. Aufgrund der chemischen Analyse enthalten die Produkte 94,5±0,2 Gew.-% $Bi_2O_3$ und 5,4±0,1 Gew.-% $Cr_2O_3$, was einer Zusammensetzung von $Bi_{1,7}Cr_{0,3}O_3$ entspricht. Eine Charakterisierung dieser Mischphasen-Pigmente ist der Tabelle 1 zu entnehmen:

*Tabelle 1*

| Glühung | Mahlung | Spezifische Oberfläche m²/g | Visuelle Farbbeurteilung |
|---------|---------|----------------------------|--------------------------|
| 2 h, 750°C | 5 min mit 500 UpM | 1,3 | |
| 8 h, 750°C | 5 min mit 500 UpM | 1,3 | orangerot |
| 16 h, 750°C | 5 min mit 500 UpM | 1,4 | |
| | 10 min mit 1000 UpM | 2,7 | orange |

*Beispiel 2:*

88,82 g fein gepulvertes metallisches Bismut (99,99%ig; > 40 µm) und 7,58 g $CrO_3$ (99%ig) wurden mit 20 ml Wasser entsprechend Beispiel 1 angepastet und weiterverarbeitet.

Jeweils die Hälfte dieser Rohstoffmischung wurde in einem Drehrohrofen 2 bzw. 16 h bei 750°C analog Beispiel 1 umgesetzt und die Glühprodukte 10 min bei 1000 UpM in einer Rührwerkskugel-Mühle nass gemahlen.

Die chemische Analyse der Endprodukte lieferte 94,4±0,1 Gew.-% $Bi_2O_3$ und 5,5±0,1 Gew.-% $Cr_2O_3$, was einer Mischphasenzusammensetzung von $Bi_{1,7}Cr_{0,3}O_3$ entspricht. Die spezifischen Oberflächen der orange gefärbten Produkte lagen bei 2,9 bzw. 3,1 m²/g.

*Beispiel 3:*

88,82 g fein gepulvertes metallisches Bismut (99,99%ig; > 40 µm) und 8,88 g Cr-(III)-hydroxid (64,2% $Cr_2O_3$) wurden mit 25 ml Wasser entsprechend Beispiel 1 angepastet und weiterverarbeitet.

Glühung der Rohstoffmischung sowie Mahlung und Aufarbeitung erfolgten wie in Beispiel 2 beschrieben.

Die chemische Analyse der Endprodukte lieferte 94,6±0,2 Gew.-% $Bi_2O_3$ und 5,5±0,3 Gew.-% $Cr_2O_3$, was einer Mischphasenzusammensetzung von $Bi_{1,7}Cr_{0,3}O_3$ entspricht.

Die spezifischen Oberflächen der orange gefärbten Produkte betrugen 2,8 bzw. 2,9 m²/g.

*Beispiel 4:*

266,48 g fein gepulvertes metallisches Bismut (99,99%ig; > 40 µm) und 17,27 g $Cr_2O_3$ (99,0%ig) wurden mit ca. 25 ml Wasser 60 min in einer Mörsermühle gemischt, bei 105°C getrocknet und anschliessend zu einem homogenen Pulver zerkleinert. Die Glühung der Rohstoffmischung erfolgte entsprechend Beispiel 1 bei 705°C (16 h). Das Glühprodukt wurde 5 min bei 500 UpM nass in einer Rührwerkskugel-Mühle gemahlen, filtriert, gewaschen und nach der Trocknung ein orangerotes Mischphasenpigment der Zusammensetzung $Bi_{1,7}Cr_{0,3}O_3$ (94,5 Gew.-% $Bi_2O_3$; 5,3 Gew.-% $Cr_2O_3$) erhalten.

Die spezifische Oberfläche betrug 1,0 m²/g.

*Beispiel 5:*

266,48 g fein gepulvertes metallisches Bismut (99,99%ig; > 40 µm) und 22,73 g $CrO_3$ (99,0%ig) wurden mit ca. 25 ml Wasser 60 min in einer Mörsermühle gemischt, bei 105°C getrocknet und anschliessend zu einem homogenen Pulver zerkleinert.

Glühung, Mahlung und Aufarbeitung erfolgten entsprechend Beispiel 4.

Das orangerote Mischphasenpigment hatte die Zusammensetzung $Bi_{1,7}Cr_{0,3}O_3$ (94,6 Gew.-% $Bi_2O_3$; 5,5% $Cr_2O_3$) und besass eine spezifische Oberfläche von 1,1 m²/g.

*Beispiel 6:*

Entsprechend Beispiel 4 wurde eine homogene Rohstoffmischung präpariert und in einem Drehrohrofen 16 h bei 750°C ohne Begasung mit einem Luft/Sauerstoff-Gemisch geglüht. Nach der Mahlung des Glühproduktes (5 min bei 500 UpM in einer Rührwerkskugel-Mühle) wurde filtriert, gewaschen und bei 105°C im Trockenschrank getrocknet.

Das orangerote Mischphasenpigment besass die Zusammensetzung $Bi_{1,7}Cr_{0,3}O_3$ (94,3 Gew.-% $Bi_2O_3$; 5,6 Gew.-% $Cr_2O_3$) sowie eine spezifische Oberfläche von 1,1 m²/g.

*Beispiel 7:*

Entsprechend Beispiel 4 wurden folgende Rohstoffe zu einer homogenen Mischung verarbeitet und 16 h bei 750°C in einem Drehrohrofen unter Luft/Sauerstoff-Begasung (20 l/h; 1:1) geglüht:

a. 198,55 g fein gepulvertes metallisches Bismut (99,99%ig, > 40 µm): 3,84 g $Cr_2O_3$ (99,0%ig) und ca. 20 ml Wasser

b. 167,20 g fein gepulvertes metallisches Bismut; 15,35 g $Cr_2O_3$ und ca. 20 ml Wasser

c. 156,75 g fein gepulvertes metallisches Bismut; 19,19 g $Cr_2O_3$ und ca. 20 ml Wasser.

Die Glühprodukte wurden 5 min bei 500 UpM nass in einer Rührwerkskugel-Mühle gemahlen, filtriert, gewaschen und bei 105°C getrocknet.

Eine Charakterisierung der Produkte ist der nachfolgenden Tabelle 2 zu entnehmen:

*Tabelle 2*

| Produkt | Analytische Zusammensetzung | Spezifische Oberfläche m²/g | Visuelle Farbbeurteilung |
|---|---|---|---|
| a. $Bi_{1,9}Cr_{0,1}O_3$ | 97,6% $Bi_2O_3$; 2,3% $Cr_2O_3$ | 1,5 | orange |
| b. $Bi_{1,6}Cr_{0,4}O_3$ | 92,3% $Bi_2O_3$; 7,5% $Cr_2O_3$ | 1,3 | gelborange |
| c. $Bi_{1,5}Cr_{0,5}O_3$ | 90,0% $Bi_2O_3$; 9,7% $Cr_2O_3$ | 1,3 | gelborange |

*Beispiel 8:*

888,25 g fein gepulvertes metallisches Bismut (99,99%ig; < 40 µm) und 57,57 g $Cr_2O_3$ (99%ig) wurden mit ca. 125 ml Wasser 1 h in einer Mörsermühle gemischt und entsprechend Beispiel 4 weiterverarbeitet.

Die Glühung der Rohstoffmischung erfolgte in einem Drehrohrofen bei 750°C unter Luft/Sauerstoff-Begasung (20 l/h; 1:1; 16 h). Je ⅓ des geglühten Produktes wurden 5 min bei 500 UpM, 10 min bei 1000 UpM sowie 60 min bei 1500 UpM nass in einer Rührwerkskugel-Mühle gemahlen, anschliessend filtriert, gewaschen und bei 105°C getrocknet. Die chemische Analyse lieferte eine Mischphasenzusammensetzung von $Bi_{1,7}Cr_{0,3}O_3$ (94,4 Gew.-% $Bi_2O_3$; 5,4 Gew.-% $Cr_2O_3$); die Charakterisierung nach der Nassmahlung ist in Tabelle 3 gegeben:

*Tabelle 3*

| Mahlung | Spezifische Oberfläche m²/g | Visuelle Farbbeurteilung |
|---|---|---|
| 5 min bei 500 UpM | 1,3 | orangerot |
| 10 min bei 1000 UpM | 3,2 | orange |
| 60 min bei 1500 UpM | 6,5 | gelborange |

*Beispiel 9:*

Es wurde eine Rohstoffmischung entsprechend Beispiel 8 bereitet und jeweils ⅓ dieser Mischung 8 h in einem Drehrohrofen bei 550, 650 bzw. 750°C unter Luft/Sauerstoff-Begasung (20 l/h; 1:1) geglüht.

Die Glühprodukte wurden 10 min bei 1000 UpM in einer Rührwerkskugel-Mühle gemahlen, filtriert, gewaschen und bei 105°C getrocknet. Die Mischphasenpigmente hatten aufgrund der chemischen Analyse die Zusammensetzung $Bi_{1,7}Cr_{0,3}O_3$ (94,5±0,2 Gew.-% $Bi_2O_3$; 5,4±0,2 Gew.-% $Cr_2O_3$); die Charakterisierung der Produkte ist Tabelle 4 zu entnehmen:

*Tabelle 4*

| Glühung | Mahlung | Spezifische Oberfläche m²/g | Visuelle Farbbeurteilung |
|---|---|---|---|
| 8 h bei 550°C | 5 min bei 1000 UpM | 5,6 | gelborange |
| 8 h bei 650°C | 5 min bei 1000 UpM | 4,2 | |
| 8 h bei 750°C | 5 min bei 1000 UpM | 2,6 | orange |

**Patentansprüche**

1. Verfahren zur Herstellung von gelborangen bis orangeroten Bismutoxid/Chromoxid-Mischphasenpigmenten der Zusammensetzung $Bi_{2-x}Cr_xO_3$ mit $0,05 \leq x \leq 0,5$, dadurch gekennzeichnet, dass man metallisches Bismut mit Chrom-(III)- und/oder Chrom (VI)-Verbindungen intensiv mischt, die homogene Mischung in oxidierender Atmosphäre bei Temperaturen zwischen 500 und 800°C glüht und anschliessend das Produkt auf Pigmentgrösse zerkleinert.

2. Verfahren gemäss Anspruch 1, dadurch gekennzeichnet, dass das metallische Bismut als fein zerteiltes Pulver vorliegt.

3. Verfahren gemäss den Ansprüchen 1 und 2, dadurch gekennzeichnet, dass als Chrom-Komponenten Chrom-(III)-oxid, Chrom-(III)-hydroxid, Chrom-(VI)-oxid, Chrom-(III)-acetat und/oder Chromoxidhydrat Verwendung finden.

4. Verfahren gemäss den Ansprüchen 1 bis 3, dadurch gekennzeichnet, dass die Mischung des Bismut-Metallpulvers und der Chrom-Komponente trocken und nass erfolgen kann.

5. Verfahren gemäss den Ansprüchen 1 bis 4, dadurch gekennzeichnet, dass die Umsetzung der Rohstoffmischung bevorzugt unter Drehbewegung in einem Glühschritt erfolgt.

6. Verfahren gemäss den Ansprüchen 1 bis 5, dadurch gekennzeichnet, dass die Umsetzung in oxidierender Atmosphäre, vorzugsweise in Gegenwart von Luft, erfolgt.

7. Verfahren gemäss den Ansprüchen 1 bis 6, dadurch gekennzeichnet, dass die Glühtemperaturen zwischen 500 und 800°C, vorzugsweise zwischen 650 und 750°C, liegen.

8. Verfahren gemäss den Ansprüchen 1 bis 7, dadurch gekennzeichnet, dass die Umsetzung zwischen 1 und 16 h, vorzugsweise zwischen 6 und 10 h, dauert.

## Claims

1. Process for the preparation of yellow-orange to orange-red bismuth oxide/chromium oxide mixed phase pigments of the composition $Bi_{2-x}Cr_xO_3$ with $0.05 \leq x \leq 0.5$, characterised in that metallic bismuth is intensively mixed with chromium (III) and/or chromium (VI) compounds, the homogeneous mixture is calcined in an oxidising atmosphere at temperatures between 500 and 800°C and the product is then comminuted to pigment size.

2. Process according to Claim 1, characterised in that the metallic bismuth is in the form of a finely, divided powder.

3. Process according to Claims 1 and 2, characterised in that the chromium components used are chromium (III) oxide, chromium(III) hydroxide, chromium(VI) oxide, chromium(III) acetate and/or chromium oxide hydrate.

4. Process according to Claims 1 to 3, characterised in that the bismuth metal powder and the chromium component can be mixed in the dry or wet state.

5. Process according to Claims 1 to 4, characterised in that the reaction of the raw material mixture is carried out preferably with rotary motion in one calcining step.

6. Process according to Claims 1 to 5, characterised in that the reaction is carried out in an oxidising atmosphere, preferably in the presence of air.

7. Process according to Claims 1 to 6, characterised in that the calcining temperatures are between 500 and 800°C, preferably between 650 and 750°C.

8. Process according to Claims 1 to 7, characterised in that the reaction lasts between 1 and 16 h, preferably between 6 and 10 h.

## Revendications

1. Procédé de production de pigments, de couleur jaune orangé à rouge orangé, en mélange de phases oxyde de bismuth/oxyde de chrome, de composition $Bi_{2-x}Cr_xO_3$, avec $0.05 \leq x \leq 0.5$, procédé caractérisé en ce qu'on mélange intensément du bismuth métallique avec des composés de chrome-(III) et/ou de chrome-(VI), on calcine le mélange homogène en atmosphère oxydante à des températures comprises entre 500 et 800°C, puis l'on fragmente le produit à la grosseur des particules de pigment.

2. Procédé selon la revendication 1, caractérisé en ce que le bismuth métallique est présent sous forme d'une poudre finement divisée.

3. Procédé selon les revendications 1 et 2, caractérisé en ce qu'on utilise comme composants apportant du chrome, l'oxyde de chrome-(III), l'hydroxyde de chrome-(III), l'oxyde de chrome-(VI), l'acétate de chrome-(III) et/ou l'hydrate d'oxyde de chrome.

4. Procédé selon les revendications 1 à 3, caractérisé en ce que l'opération de mélangeage de la poudre de bismuth métallique et du composant apportant le chrome peut s'effectuer à sec et au mouillé.

5. Procédé selon les revendications 1 à 4, caractérisé en ce que la réaction du mélange des matières premières s'effectue de préférence sous déplacement par rotation ou mouvement pivotant dans une étape de calcination.

6. Procédé selon les revendications 1 à 5, caractérisé en ce que la réaction a lieu en atmosphère oxydante, avantageusement en présence d'air.

7. Procédé selon les revendications 1 à 6, caractérisé en ce que les températures de calcination se situent entre 500 et 800°C, avantageusement entre 650 et 750°C.

8. Procédé selon les revendications 1 à 7, caractérisé en ce que la réaction dure entre 1 et 16 h, avantageusement entre 6 et 10 h.